# EUROPÄISCHE PATENTSCHRIFT

(11) **EP 3 306 082 B1**
(45) Veröffentlichungstag und Bekanntmachung des Hinweises auf die Patenterteilung: **08.12.2021**
(21) Anmeldenummer: 17194777.3
(22) Anmeldetag: 04.10.2017
(51) Int. Cl.: F03G 7/06

(54) **ENERGIEWANDLER MIT THERMOELASTISCHER ANORDNUNG SOWIE HEIZ/KÜHLSYSTEM**
ENERGY CONVERTER WITH THERMOELASTIC ASSEMBLY AND HEATING/COOLING SYSTEM
CONVERTISSEUR D'ÉNERGIE DOTÉ D'UN ENSEMBLE THERMOÉLASTIQUE AINSI QUE SYSTÈME DE CHAUFFAGE/REFROIDISSEMENT

(30) Priorität: 04.10.2016 DE 102016118776
(43) Veröffentlichungstag der Anmeldung: 11.04.2018
(73) Patentinhaber: Universität des Saarlandes, 66123 Saarbrücken (DE)
(72) Erfinder: Kirsch, Susanne-Marie, 66693 Mettlach-Saarhölzbach (DE); Welsch, Felix, 66280 Sulzbach/Saar (DE); Seelecke, Stefan, 66119 Saarbrücken (DE)
(74) Vertreter: Banse & Steglich Patentanwälte PartmbB

(56) Entgegenhaltungen:
- DE-A1- 3 117 112
- JP-A- H01 125 570
- JP-A- S61 252 873
- US-A- 4 037 411

## Beschreibung

### Technisches Gebiet

Die Erfindung betrifft Energiewandler, die unter Nutzung von elastischer Verformung und Entspannung eines thermoelastischen Elements eine Heizwirkung bzw. eine Kühlwirkung erzielen, oder durch die Nutzung einer Temperaturdifferenz eine mechanische Energiegewinnung ermöglicht.

### Technischer Hintergrund

Energiewandler mit aktiven Elementen aus einer Formgedächtnislegierung ermöglichen die Realisierung von alternativen Energiewandlern. Diese nutzen kalorische Effekte in ferroischen Materialien, die hinsichtlich ihres Wirkungsgrads zu kompressorbasierten Energiewandlern, wie z.B. Wärmepumpen, Kühlschränken und dergleichen, vergleichbar sind.

Aus dem Stand der Technik sind zahlreiche Varianten zur Nutzung von thermoelastischen Materialien zur Kühlung von Fluiden bekannt, die allesamt auf einem zyklischen Verspannungs- und Entspannungsprozess eines thermoelastischen Materials basieren.

Beispielsweise zeigt die Druckschrift US 2012/0273158 A1 ein Kühlsystem basierend auf einem thermoelastischen Effekt, bei dem thermoelastisches Material zwischen einem Umgebungsbereich und einem Kühlbereich bewegt wird, wobei dieses elastisch verformt bzw. entspannt wird, um ein Kühlen des Kühlbereichs und eine Abgabe von Wärme in die Umgebung zu bewirken.

Aus der Druckschrift US 4,305,250 A ist bekannt, die Verspannung bzw. Entspannung des thermoelastischen Materials zwischen zwei gleichsinnig rotierenden Scheiben zu bewirken, zwischen denen das thermoelastische Material angeordnet ist. Die Scheiben sind zueinander geneigt angeordnet. Durch den Umlauf der rotierenden Scheiben wird das dazwischen angeordnete thermoelastische Material zyklisch elastisch verspannt und entspannt, so dass eine zyklische Wärmeabgabe und Kühlwirkung erreicht werden kann. Wird diese Vorrichtung mit einer Rotationsbewegung angetrieben, wird das thermoelastische Material in Längsrichtung verformt, wobei der axiale Hub durch den Schrägungswinkel zwischen den beiden Scheiben definiert ist. Der maximale axiale Hub ist bei den schräggestellten Scheiben über den Schrägungswinkel definiert und der Verlauf der Verformung entspricht einer Sinusform. Aufgrund der konstruktionsbedingten Festlegung des Hubes ist eine flexiblere Gestalt von Be- und Entlastungsprofil nicht möglich.

Zusätzlich führt die Neigung des thermoelastischen Materials zu mindestens einer der Flächen der Scheiben an den Einspannpunkten zu einer zyklischen Biegebelastung, wodurch die Lebensdauer reduziert wird.

Aus der Druckschrift JP H01 125570 A ist ein thermoelastisches Antriebssystem bekannt, bekannt, mit zwei Halteelementen und zwischen den Halteelementen angeordneten thermoelastischen Elementen. Die Anordnung der Halteelemente ist konzentrisch, wobei die thermoelastischen Elemente in radialer Richtung angeordnet sind.

Die Druckschrift DE 31 17 112 A1 offenbart einen mit verlängerten Thermobimetallen ausgerüsteten Motor. Die Bimetalle sind auf einer Scheibe in Achsrichtung angeordnet und ihre Verlängerungen werden in einer zweiten Scheibe in Radiusschlitzen geführt. Die Bimetalle sind so angeordnet, dass sie sich bei Erwärmung nach innen verbiegen und über die Kurvenscheibe abgleiten und die Drehbewegung ausführen.

Die Druckschrift US 4,037,411 A offenbart eine Energiewandlungseinrichtung mit mehreren temperaturempfindlichen Elementen, die zwischen Halteelementen angeordnet sind, die ein Ausdehnen und Zusammenziehen der temperaturempfindlichen Elemente zulassen und wobei eine relative Bewegung zwischen den temperaturempfindlichen Elementen und den Halteelementen zur Entnahme von Energie während des Entlastens der temperaturempfindlichen Elemente zugelassen wird. Die Anordnung der Halteelemente ist konzentrisch, wobei die temperaturempfindlichen Elemente in radialer Richtung angeordnet sind.

Die Druckschrift JP S61 252873 A offenbart einen thermoelastischen Energiewandler. Der Energiewandler umfasst eine thermoelastische Anordnung mit mindestens einem thermoelastischen Element aus einem thermoelastischen Material und zwei Halteelemente, zwischen denen das mindestens eine thermoelastische Element in einer Längsrichtung angeordnet ist. Eine Drehachse eines der Halteelemente ist zu der Drehachse des anderen Halteelements geneigt, so dass bei Rotation der Halteelemente das mindestens eine thermoelastische Element gedehnt wird.

Es ist daher Aufgabe der vorliegenden Erfindung, einen verbesserten Energiewandler mit einem thermoelastischen Element zur Verfügung zu stellen, die einen höheren Wirkungsgrad und eine höhere Lebensdauer aufweist.

### Offenbarung der Erfindung

Diese Aufgabe wird durch den Energiewandler mit mindestens einem thermoelastischen Element gemäß Anspruch 1 sowie durch das Energiewandlersystem gemäß dem nebengeordneten Anspruch gelöst.

Weitere Ausgestaltungen sind in den abhängigen Ansprüchen angegeben.

Gemäß einem ersten Aspekt ist ein thermoelastischer Energiewandler, insbesondere eine thermoelastische Heiz/Kühlvorrichtung, zum Einsatz in einem Energiewandlersystem vorgesehen, umfassend:
- eine thermoelastische Anordnung mit mindestens einem thermoelastischen Element aus einem thermoelastischen Material;
- zwei Halteelemente, zwischen denen das mindestens eine thermoelastische Element in einer Längsrichtung angeordnet ist,
- ein Befestigungselement zum Halten eines Endes des mindestens einen thermoelastischen Elements;
- eine Führungseinrichtung, die mit dem Befestigungselement des mindestens einen thermoelastischen Elements gekoppelt ist, um bei einer synchronen Rotation der Halteelemente relativ zu der Führungseinrichtung eine Längenänderung des mindestens einen thermoelastischen Elements in der Längsrichtung zu bewirken, so dass eine zyklische elastische Verformung und Entspannung des mindestens einen thermoelastischen Elements erreicht wird.
- wobei die Führungseinrichtung mindestens ein Profilelement aufweist, das eine Führungsspur zum Zusammenwirken mit dem Befestigungselement des mindestens einen thermoelastischen Elements aufweist, so dass bei Rotation der Halteelemente relativ zu der Führungseinrichtung das Befestigungselement entlang einer Kontur der Führungsspur in einer Umfangsrichtung bewegt wird und gleichzeitig die Längenänderung in der Längsrichtung bewirkt.

Eine Idee des obigen Energiewandlers besteht darin, ein zwischen zwei rotierbaren Halteelementen angeordnetes bzw. eingespanntes thermoelastisches Element mit Hilfe mindestens einer Führungseinrichtung elastisch zu verformen und zu entspannen. Die Führungseinrichtung dient zur Führung eines Befestigungselements, das ein Ende des thermoelastischen Elements hält, so dass bei der Drehung der Halteelemente das Befestigungselement durch die Führungseinrichtung geführt wird bzw. sich an der Kontur entlangbewegt. Dadurch wird eine Längenänderung des thermoelastischen Elements erzwungen, die zu einer elastischen Verspannung oder Entspannung des thermoelastischen Elements führt.

Thermoelastische Elemente sind in der Regel aus einem thermoelastischen Material ausgebildet, das z.B. eine Formgedächtnislegierung aufweist, bei der durch eine Umwandlung der Gitterstruktur aufgrund einer Zug-, Druck-, Biege-, Torsions- oder Scherbelastung oder -entlastung latente Wärme freigesetzt oder aufgenommen wird.

Die Führung des Befestigungselements an der Führungseinrichtung ermöglicht eine rein axiale Verformung des thermoelastischen Elements und kann dazu beitragen, eine Fehlbelastung des thermoelastischen Materials, z.B. durch Biegung oder Scherung quer zur Längserstreckung oder Torsion zu vermeiden.

Weiterhin kann durch entsprechende Konturierung der Führungseinrichtung das Verspannungsprofil des thermoelastischen Elements frei und insbesondere wirkungsgrad-optimiert gewählt werden, so dass der Effizienznachteil einer rein sinusförmigen Verformung, wie sie aus dem Stand der Technik bekannt ist, vermieden werden kann.

Durch das Vorsehen der Führung durch die Führungseinrichtung, die zu der zyklischen Verspannung und Entspannung des thermoelastischen Elements führt, kann der Hubverlauf und die Hubhöhe in einem großen Bereich frei gewählt werden und ist geometrisch nicht durch die Dimensionierung der Halteelemente beschränkt.

Somit ist eine flexible Ausgestaltung der Führungseinrichtung möglich. Dies ermöglicht eine freie Wahl der Be- und Entlastungszyklen während einer Umdrehung der Halteelemente, so dass auch mehrere Be- und Entlastungszyklen pro Umdrehung der Halteelemente erreicht werden können. Durch entsprechende Führung des Befestigungselements durch die Führungseinrichtung kann das thermoelastische Element sowohl auf Zug als auch auf Druck belastet werden.

Weiterhin kann ein weiteres Ende des mindestens einen thermoelastischen Elements fest an einem der Halteelemente befestigt sein.

Alternativ kann ein weiteres Ende des mindestens einen thermoelastischen Elements über ein weiteres Befestigungselement mit einer weiteren Führungseinrichtung gekoppelt sein, um bei der Rotation der Halteelemente relativ zu der Führungseinrichtung und der weiteren Führungseinrichtung eine Längenänderung des mindestens einen thermoelastischen Elements in Längsrichtung zu bewirken, so dass eine zyklische elastische Verformung und Entspannung des mindestens einen thermoelastischen Elements erreicht wird.

Weiterhin können die Führungseinrichtung und die weitere Führungseinrichtung das jeweilige Befestigungselement synchron, phasenverschoben oder asynchron bezüglich eines Drehwinkels der Halteelemente in der Längsrichtung auslenken.

Es kann vorgesehen sein, dass die weitere Führungseinrichtung mindestens ein Profilelement aufweisen, das eine Führungsspur zum Zusammenwirken mit dem Befestigungselement des mindestens einen thermoelastischen Elements aufweist, so dass bei Rotation der Halteelemente relativ zu der weiteren Führungseinrichtung das Befestigungselement entlang einer Kontur der Führungsspur in einer Umfangsrichtung bewegt wird und gleichzeitig die Längenänderung in der Längsrichtung bewirkt.

Gemäß einer Ausführungsform kann das Profilelement eine Profilscheibe aufweisen, die eine sich in Längsrichtung erstreckende Kontur aufweist, entlang der das Befestigungselement sich bewegt.

Das Profilelement kann einen Profilring aufweisen, der eine nach innen oder außen gerichtete Führungsstruktur aufweist, um das Befestigungselement des mindestens einen thermoelastischen Elements bei Rotation des Halteelements relativ zu der Führungseinrichtung in der Längsrichtung auszulenken.

Es kann vorgesehen sein, dass das mindestens eine Befestigungselement gegen ein Verkippen gehalten ist und insbesondere ausschließlich Freiheitsgrade der Bewegung des mindestens einen Befestigungselements in Längsrichtung und Umfangsrichtung zuzulassen.

Es kann insbesondere vorgesehen sein, dass das mindestens eine Profilelement mehrere konzentrische Führungspuren aufweist, um das mindestens eine Befestigungselement gegen ein Verkippen zu halten und insbesondere ausschließlich Freiheitsgrade der Bewegung des mindestens einen Befestigungselements in Längsrichtung und Umfangsrichtung zuzulassen.

Gemäß einer Ausführungsform kann das mindestens eine Profilelement bei Rotation der Halteelemente relativ zu der Führungseinrichtung bzw. den Führungseinrichtungen eine Zug- oder eine Druckbelastung auf das mindestens eine thermoelastische Element ausüben.

Weiterhin können mehrere Profilelemente vorgesehen sind, um bei Rotation der Halteelemente sowohl eine Zug- als auch eine Druckbelastung auf das mindestens eine Befestigungselement auszuüben.

Es kann vorgesehen sein, dass beide Haltelemente jeweils mit mindestens einem Profilelement versehen sind, um die Längenänderung des mindestens einen thermoelastischen Elements zu bewirken.

Gemäß einer Ausführungsform können das mindestens eine Profilelement an den beiden Halteelementen gegeneinander verdrehbar sein, so dass die Bewegungen der Befestigungselemente beidseitig synchron, phasenverschoben oder asynchron bezüglich der Rotation der Halteelemente relativ zu der Führungseinrichtung erfolgen.

Weiterhin kann das mindestens eine Profilelement eine Führungsspur aufweisen, dessen Kontur Abschnitte aufweist, um bei Rotation der Halteelemente relativ zu der Führungseinrichtung unterschiedliche Gradienten der Längenänderung des mindestens einen thermoelastischen Elements bezüglich des Drehwinkels der Halteelemente zu bewirken.

Es kann vorgesehen sein, dass das mindestens eine Profilelement eine Führungsspur aufweist, dessen Kontur separate oder einstückig zusammenhängende Abschnitte aufweist, um bei Rotation der Halteelemente relativ zu der Führungseinrichtung zwei oder mehrere Längenänderungen des mindestens einen thermoelastischen Elements in eine Richtung pro Umdrehung der Halteelemente zu bewirken.

Weiterhin können mehrere thermoelastischen Elemente in einer oder mehreren konzentrischen Kreisanordnungen zwischen den Halteelementen angeordnet sind, wobei jedem der Kreisanordnungen eine separate Führungseinrichtung zugeordnet ist. Dadurch können zusätzlich thermoelastische Materialien mit unterschiedlichen Übergangstemperaturen und/oder anderen thermoelastischen Eigenschaften verwendet werden, um eine größere Temperaturdifferenz zu erzielen.

Gemäß einem weiteren Aspekt ist ein Energiewandlersystem, insbesondere ein Heiz/Kühlsystem vorgesehen, umfassend:
- ein Gehäuse;
- der obige thermoelastische Energiewandler, der in dem Gehäuse aufgenommen ist;
- eine Antriebswelle zum Rotieren der Halteelemente relativ zu der Führungseinrichtung;
- mindestens zwei separate Strömungskanäle zum Leiten eines Fluids, insbesondere in gasförmiger oder flüssiger Form, wie z.B. von Luft oder Wasser, jeweils durch einen Abschnitt, der ein Segment einer durch die Bewegung des mindestens einen thermoelastischen Elements definierten zylindrischen Mantelfläche umfasst oder durch dieses begrenzt wird.

Weiterhin kann die Antriebswelle mit den Halteelementen oder mit der Führungseinrichtung über mindestens ein Planetengetriebe gekoppelt sein.

Das obige Energiewandlersystem kann als Wärme-Kraft-Maschine eingesetzt werden. Dabei kommt der bereits erwähnte wesentliche Vorteil des Profilelements zur Geltung, dass das Profil den Erfordernissen einer Drehmomenterzeugung optimal angepasst werden kann.

### Kurzbeschreibung der Zeichnungen

Ausführungsformen werden nachfolgend anhand der beigefügten Zeichnungen näher erläutert. Es zeigen:
- Figur 1: eine Prinzipdarstellung des Energiewandlers gemäß einer ersten Ausführungsform;
- Figur 2: eine schematische Darstellung eines Kreisprozesses zur Wärme- und Kältegenerierung durch einen Phasenübergang anhand eines diskontinuierlichen Prozesses;
- Figur 3: eine perspektivische Darstellung eines Profilelements der Ausführungsform der Figur 1;
- Figur 4: eine Prinzipdarstellung einer weiteren Ausführungsform;
- Figur 5: eine perspektivische Darstellung des Profilelements der Ausführungsform der Figur 4;
- Figur 6: eine Prinzipdarstellung einer weiteren Ausführungsform zum Bereitstellen einer Zug- und Druckbelastung auf die thermoelastischen Elemente;
- Figur 7: eine Prinzipdarstellung einer weiteren Ausführungsform mit einem außerhalb des Kühlzylinders angeordneten Profilelement;
- Figur 8: eine Prinzipdarstellung eines Energiewandlers mit beidseitig angeordneten Profilelementen;
- Figur 9: eine Querschnittsdarstellung durch ein Energiewandlersystem für einen der zuvor beschriebenen Energiewandler;
- Figur 10: eine schematische Darstellung eines beispielhaften Profilelements, das aus Einzelprofilsegmenten zusammengesetzt ist.

### Beschreibung von Ausführungsformen

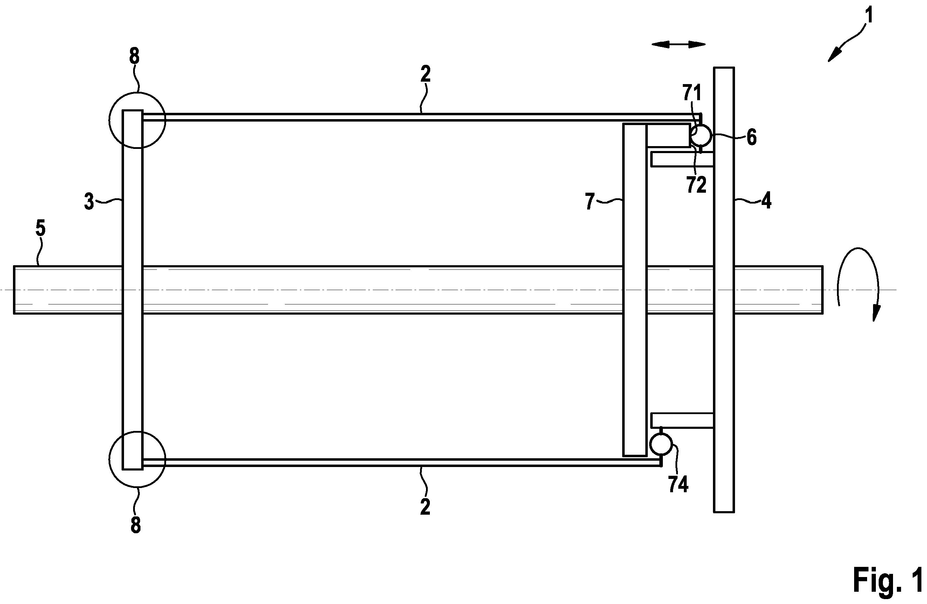

Figur 1 zeigt eine Prinzipdarstellung eines Energiewandlers 1 mit einer Anordnung aus mehreren thermoelastischen Elementen 2. Die thermoelastischen Elemente 2 können in Form eines Drahtes oder sonstigen länglichen Materials ausgebildet sein.

Die thermoelastischen Elemente 2 werden beim Betrieb des Energiewandlers 1 zyklisch verspannt und entspannt. Die Verspannung erfolgt in der vorliegenden Ausführungsform durch eine elastische Zugbelastung. Um eine zyklische elastische Verformung der thermoelastischen Elemente 2 zu erreichen, sind diese zwischen einem ersten Halteelement 3 und einem zweiten Halteelement 4 angeordnet.

Das erste und zweite Halteelement 3, 4 sind mit jeweils einem Ende der thermoelastischen Elemente 2 verbunden und mit einer drehbaren Antriebswelle 5 gekoppelt, so dass diese im Betriebsfall synchron zueinander rotierbar sind. Die Kopplung der Halteelemente 3, 4 mit der Welle 5 kann durch Befestigung der Halteelemente 3, 4 an der Antriebswelle 5 oder durch ein geeignetes Getriebe erfolgen.

Erste Enden der thermoelastischen Elemente 2 sind fest an Befestigungsstellen 8 des ersten Halteelements 3 befestigt. Die Befestigung kann entlang einer zur Antriebswelle 5 konzentrischen Kreislinie erfolgen, jedoch können für andere Ausführungsformen auch elliptische oder sonstige Anordnungslinien vorgesehen sein. Die Befestigungsstellen 8 können in Umfangsrichtung gleichmäßig oder in individuell verschiedenen Abständen zueinander angeordnet sein.

Zweite, den ersten Enden gegenüberliegende Enden der thermoelastischen Elemente 2 sind mit Hilfe von entsprechenden Befestigungselementen 6 axial beweglich jedoch in Umfangsrichtung fest an dem zweiten Halteelement 4 gehalten. Die Befestigungselemente 6 sind im Wesentlichen so ausgebildet, dass bei deren axialen Bewegungen keine Biege- oder Scherbelastung quer zur Längsrichtung der thermoelastischen Elemente 2 und/oder Torsionsbelastung auftreten können.

Es ist ein feststehendes (erstes) Profilelement 7 vorgesehen, das ein Beispiel für eine Führungseinrichtung bildet. Das Profilelement 7 weist eine Konturlinie 71 auf, an der die jeweiligen Befestigungselemente 6 durch elastische Zugkraft in Längsrichtung anliegen und an dieser entlanglaufen bzw. durch die die jeweiligen Befestigungselemente 6 entlang einer Führungsspur 72 geführt werden, wenn die thermoelastischen Elemente 2 um das Profilelement 7 rotieren bzw. relativ zu dem Profilelement 7 rotieren.

Die Führungsspur 72 variiert in axialer Richtung entsprechend einer vorgegebenen Kontur, so dass die Befestigungselemente 6 in der gezeigten Ausführungsform in axialer Richtung in Richtung des zweiten Halteelements 4 gedrückt werden und dadurch die thermoelastischen Elemente 2 durch Zugbelastung elastisch verformen bzw. eine Entspannung der thermoelastischen Elemente 2 in Richtung des ersten Halteelements 3 ermöglicht. Wenn die Führungseinrichtung ortsfest gehalten ist, kann die Verformung und Entspannung der thermoelastischen Elemente 2 stets an den gleichen Bereichen entlang des Umfangs der zylindrischen Anordnung der thermoelastischen Elemente 2 des Energiewandlers 1 bewirkt werden. Alternativ kann die Führungseinrichtung 7 rotierbar vorgesehen sein, so dass selbst bei ortsfesten Halteelementen 3,4 durch relative Rotation die Verformung und Entspannung der thermoelastischen Elemente 2 erreicht werden kann.

Die Befestigungselemente 7 können zur Verringerung der Reibung mit Rollen 74 versehen sein, die über die Führungsspur rollen können, so dass die Gleit-, Reibungs- oder Haftkräfte in Umfangsrichtung reduziert sind.

Die in Figur 1 gezeigte Ausführungsform sieht eine Zugbelastung der thermoelastischen Elemente 2 in Richtung des zweiten Halteelements 4 und eine Entspannung der thermoelastischen Elemente 2 in Richtung des ersten Halteelements 3 vor.

Das thermoelastische Material des thermoelastischen Elements 2 kann eine Formgedächtnislegierung, wie z.B. NiTi enthalten und so durch einen Phasenübergang, d.h. eine Umwandlung der Gitterstruktur, bei elastischer Verspannung oder Entspannung latente Wärme freisetzen oder aufnehmen. Üblicherweise wandelt sich bei Formgedächtnislegierungen, die unter Krafteinwirkung einer mechanischen Verformung ausgesetzt werden, eine austenitische Materialstruktur in eine martensitische Materialstruktur um und gibt dabei Wärme ab. Wird das Material entlastet, so nimmt dieses aufgrund der elastischen Verformung die ursprüngliche Form wieder ein, wobei sich die martensitische Materialstruktur in eine austenitische Materialstruktur zurückwandelt und dabei Wärme aus der Umgebung aufnimmt.

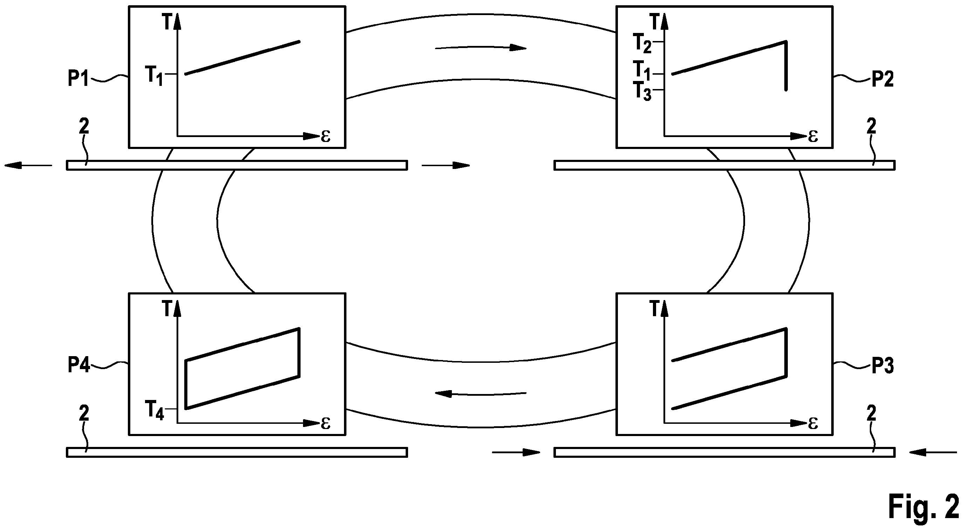

In Figur 2 ist ein adiabatischer Kreisprozess für die Wärme- und Kältegenerierung durch einen Phasenübergang eines Formgedächtnismaterials in einem diskontinuierlichen Prozess dargestellt. Ausgehend von einer Phase P1, in der das Formgedächtnismaterial seine Temperatur T1 hat, wird bei einer adiabatischen elastischen Verformung des Formgedächtnismaterials (die elastische Spannung ε nimmt zu) latente Wärme frei, so dass sich das Formgedächtnismaterial auf eine Temperatur T2 erwärmt. In einer Phase P2 wird bei gleichbleibender Deformation die freigewordene Wärme über eine Wärmesenke abgeleitet, so dass die Temperatur des Formgedächtnismaterials auf eine Temperatur T3 abnimmt. In einer Phase P3 wird das thermoelastische Material wieder adiabatisch entspannt (ε nimmt ab) und nimmt dabei latente Wärme auf, so dass dessen Temperatur abnimmt und nach dem Entspannungsprozess eine Temperatur T4 erreicht wird, wie in der Phase P4 verdeutlicht ist. Durch Aufnahme von Wärme von einer Wärmequelle wird die Temperatur des Formgedächtnismaterials wieder auf die Ausgangstemperatur T1 für den Prozess der Phase P1 erhöht.

In der Ausführungsform der Figur 1, bei der im oberen Teil des Energiewandlers 1 die thermoelastischen Elemente 2 elastisch gedehnt werden und in dem unteren Teil die thermoelastischen Element 2 entspannt werden, tritt also eine Kühlwirkung durch eine Wärmeaufnahme im unteren Teil und eine Erwärmung durch eine Wärmeabgabe entsprechend in dem oberen Teil auf. So kann der obige Energiewandler 1 als Heiz- und/oder Kühlvorrichtung eingesetzt werden.

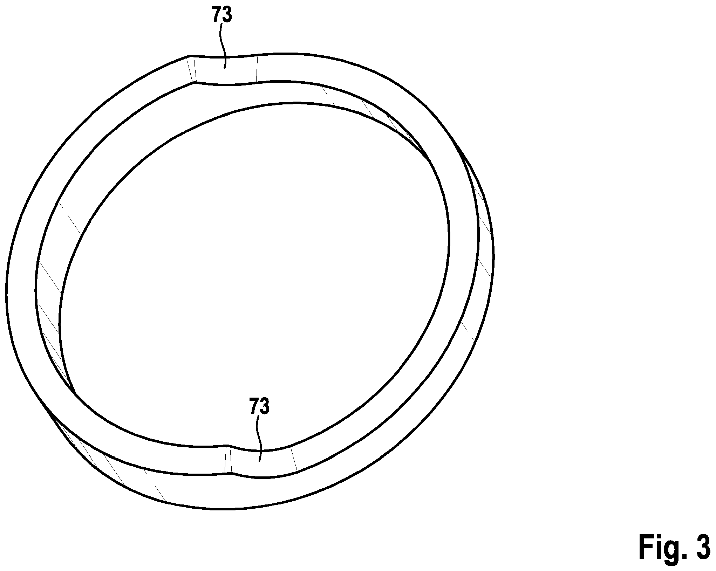

Im Wesentlichen kann die Kontur des Profilelements 7 frei festgelegt werden. Es wurde jedoch festgestellt, dass der Wirkungsgrad der Erwärmung bzw. der Kühlung umso höher ist, je schneller die Verformung bzw. Entspannung stattfindet. Aus diesem Grund kann das Profilelement 7 mit einer Führungsspur 72 ausgebildet sein, die eine Kontur aufweist, welche beispielsweise in Figur 3 dargestellt ist.

Man erkennt, dass ein elastisches Verformen und Entspannen in Bereichen relativ hoher Gradienten (bezüglich des Verlaufs der Umfangsrichtung) der Kontur der Führungsspur 72 erfolgt. Die Abgabe von Wärme bzw. die Aufnahme von Wärme erfolgt dann in den Bereichen des Energiewandlers 1, die sich an das Durchlaufen der thermoelastischen Elemente 2 durch die Bereiche mit den hohen Gradienten, in denen die Verformung bzw. Entspannung erfolgt ist, anschließen.

Zwischen den Bereichen mit hohem Gradienten kann die Führungsspur 72 im Wesentlichen flach ausgebildet sein, d.h. keine Längenänderung der thermoelastischen Elemente 2, d.h. keine Verspannung oder Entspannung, bewirken.

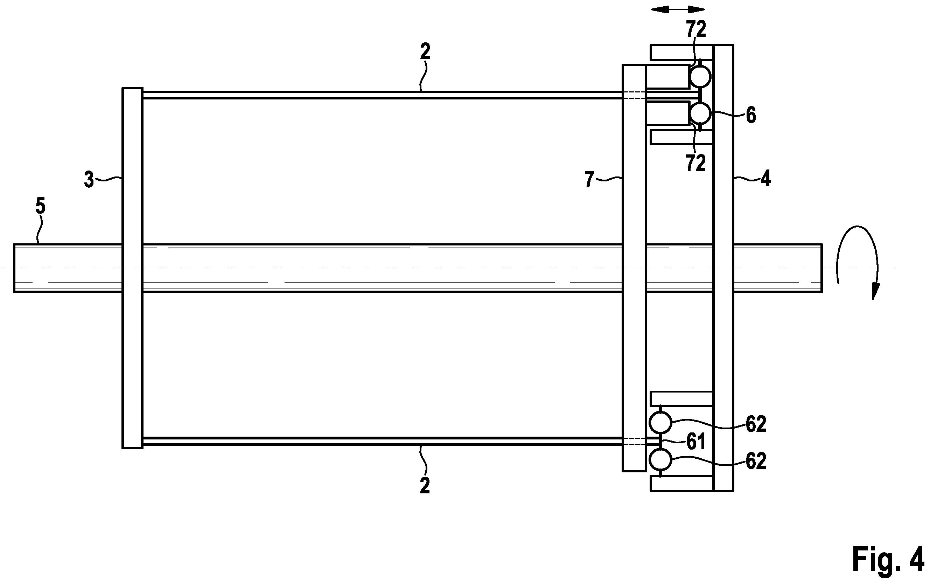

Die Ausführungsform der Figur 4 sieht vor, dass die Befestigungselemente 6, mit denen die zweiten Enden der thermoelastischen Elemente 2 verbunden sind, eine Doppelführung entlang zwei konzentrischen Führungsspuren 72 aufweisen, zwischen denen jeweils das thermoelastische Element 2 mit seinem zweiten Ende gehalten ist, so dass die Befestigungselemente 6 bezüglich der Längsrichtung der thermoelastischen Elemente 2 nicht verkippen können. Auf diese Weise wird eine Biege-, Scher- und Torsionsbelastung an der Verbindungsstelle zwischen dem zweiten Ende des thermoelastischen Elements 2 und dem jeweiligen Befestigungselement 6 ausgeschlossen.

Die Befestigungselemente 6 können dazu beispielsweise jeweils über eine Nabe 61 verbundene Laufräder 62 aufweisen. Die Nabe 61 ist mit dem thermoelastischen Element 2 fest verbunden. Die Laufräder 62 sind so angeordnet, dass diese jeweils auf den zwei konzentrisch zueinander angeordneten Führungsspuren 72 des Profilelements 7 entlanglaufen und so, wie bereits in Verbindung mit der Ausführungsform der Figur 1 beschrieben, eine elastische Zugbelastung auf die thermoelastischen Elemente 2 ausüben oder diese entspannen. Um stets eine Biege-, Scher und Torsionsbelastung an der Verbindungsstelle zwischen dem zweiten Ende des thermoelastischen Elements 2 und dem jeweiligen Befestigungselement 6 auszuschließen, sind die Konturierungen beider Führungsspuren 72 bezüglich der Winkellage identisch.

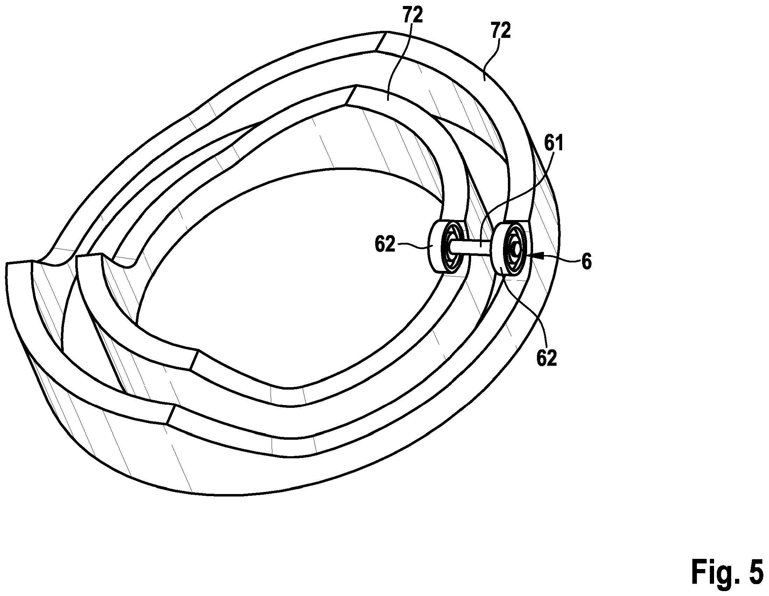

In Figur 5 ist beispielsweise die Anordnung eines Befestigungselements 6 mit über eine Nabe 61 verbundenen Laufrädern 62 auf zwei Führungsspuren 72 des Profilelements 7 dargestellt. Ferner ist eine Konturierung des Profilelements 7 so dargestellt, dass in Umfangsrichtung Abschnitte hoher und Abschnitte niedriger Gradienten vorliegen. Insbesondere weist das Profilelement 7 der Figur 5 für einen Umlauf der Halteelemente 3, 4 zwei Erwärmungszyklen und zwei Kühlzyklen auf, so dass jeweils in zwei Bereichen der durch die umlaufenden thermoelastischen Elemente 2 gebildeten zylinderförmigen Mantelfläche des Energiewandlers 1 eine Kühlwirkung bzw. eine Wärmeabgabe erreicht wird.

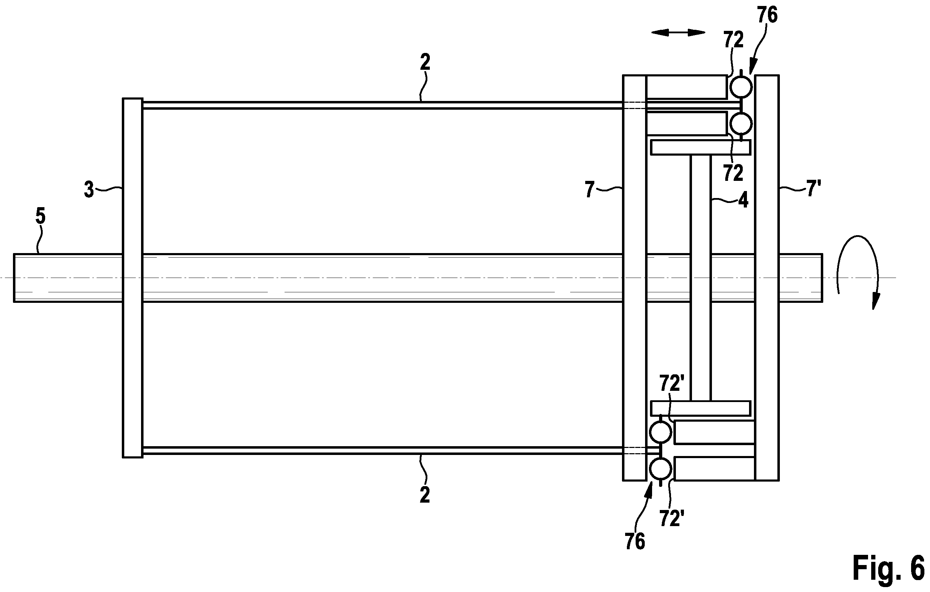

Figur 6 zeigt eine weitere Ausführungsform, bei der eine weitere Führungseinrichtung in Form eines zweiten Profilelements 7' zusätzlich zu dem Profilelement 7 vorgesehen ist. Durch die beiden Profilelemente 7, 7' kann sowohl eine Zugbelastung entsprechend der Funktion, die in den Ausführungsformen der Figuren 1 und 4 beschrieben ist, als auch eine Druckbelastung auf die thermoelastische Elemente 2 ausgebildet werden. Dazu können die thermoelastischen Elemente 2 mit unterschiedlichen Geometrien vorgesehen sein, die auch Druckbelastung ohne Verbiegung aufnehmen können. Mögliche Profile der thermoelastischen Elemente 2 können Rundprofile, elliptische oder vieleckige Profile, Hohlprofile und dergleichen sein.

In der Ausführungsform der Figur 6 sind die Profilelemente 7, 7' so ausgebildet, dass diese Führungsspuren mit Konturen aufweisen, die einander korrespondierend sind und so einen Führungsschlitz 76 für die Befestigungselemente 6 ausbilden, so dass die Befestigungselemente 6 möglichst spielfrei zwischen den Konturen der beiden Profilelemente 7, 7' geführt werden, um je nach Drehwinkellage der Halteelemente 3, 4 eine axiale Zugbelastung oder eine axiale Druckbelastung auf die entsprechenden thermoelastischen Elemente 2 auszuüben. In einer nicht gezeigten alternativen Ausführungsform kann nur das zweite Profilelement 7' vorgesehen sein, das die thermoelastischen Elemente 2 lediglich auf Druckbelastung beaufschlagt. In diesem Fall werden die Befestigungselemente 6 durch elastische Druckbeaufschlagung an der Kontur des zweiten Profilelements 7' geführt.

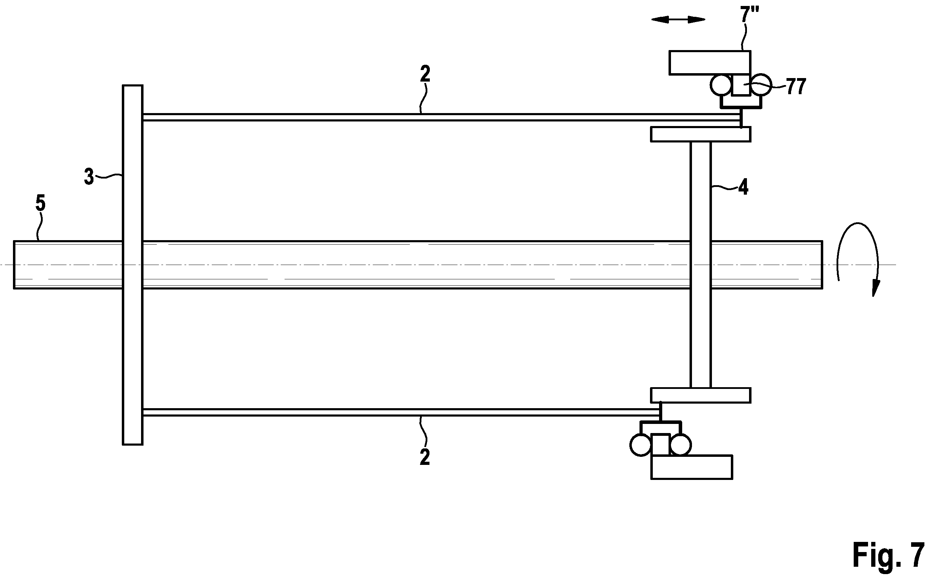

In der Ausführungsform der Figur 7 ist ein drittes Profilelement 7" als Führungseinrichtung ringförmig ausgebildet. An der inneren Mantelfläche des dritten Profilelements 7" ist ein Vorsprung oder eine Nut als eine Führungsstruktur 77 zur Führung einer korrespondierenden Führungsstruktur der Befestigungselemente 6 vorgesehen, die die Befestigungselemente 6 führt und in axialer Richtung verschieben kann.

Weiterhin sind die Befestigungselemente 6 an einer Außenseite des zweiten Halteelements 4 so angebracht, dass diese in Umfangsrichtung mitgenommen werden und sich in axialer Richtung verschieben können. Dazu kann ein weiteres Ende des Befestigungselements 6 an dem zweiten Halteelement 4 axial beweglich gehalten werden, so dass über das zweite Halteelement 4 die Befestigungselemente 6 entlang der Führungsstruktur des dritten Profilelements 7" bewegt werden, um die axiale Auslenkung zu erreichen.

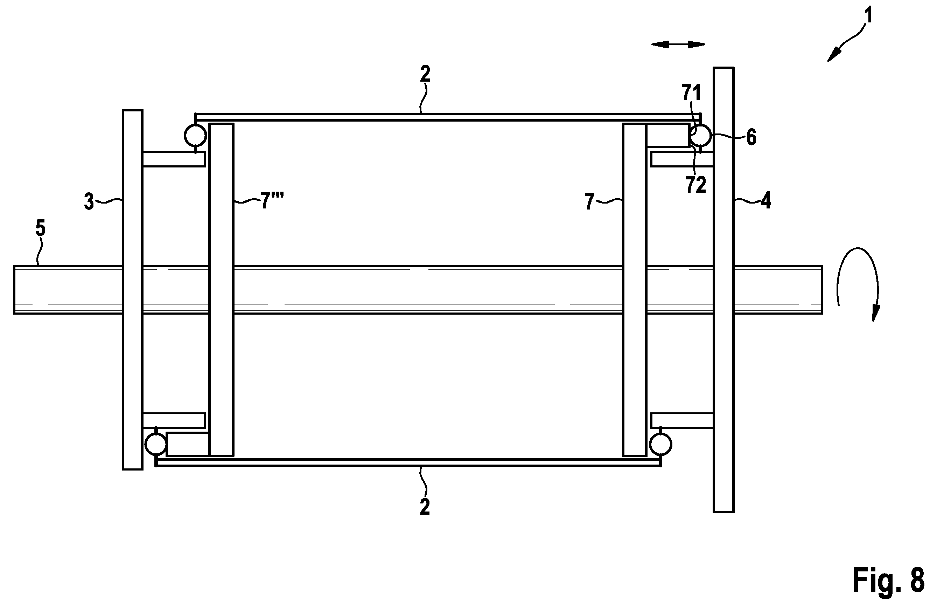

Gemäß einer Ausführungsform der Figur 8, die im Wesentlichen der Ausführungsform der Figur 1 ähnelt, kann ein Energiewandler 1 auch im Bereich des ersten Halteelements 3 mit einem vierten Profilelement 7'" versehen sein. Durch relative Verdrehung der Konturen des Profilelements 7 und des vierten Profilelements 7'" kann eine Anpassung des resultierenden Belastungsprofils der thermoelastischen Elemente 2 während des Prozesses erreicht werden. Durch ein Verdrehen des ersten und des vierten Profilelements 7, 7'" relativ zueinander kann zudem ein Grad der elastischen Verformung der thermoelastischen Elemente 2 eingestellt werden und insbesondere dadurch die Leistung des Systems oder der Verschleiß der thermoelastischen Elemente 2 unabhängig von der Drehzahl der Anordnung, mit der die Antriebswelle 5 angetrieben wird, beeinflusst werden.

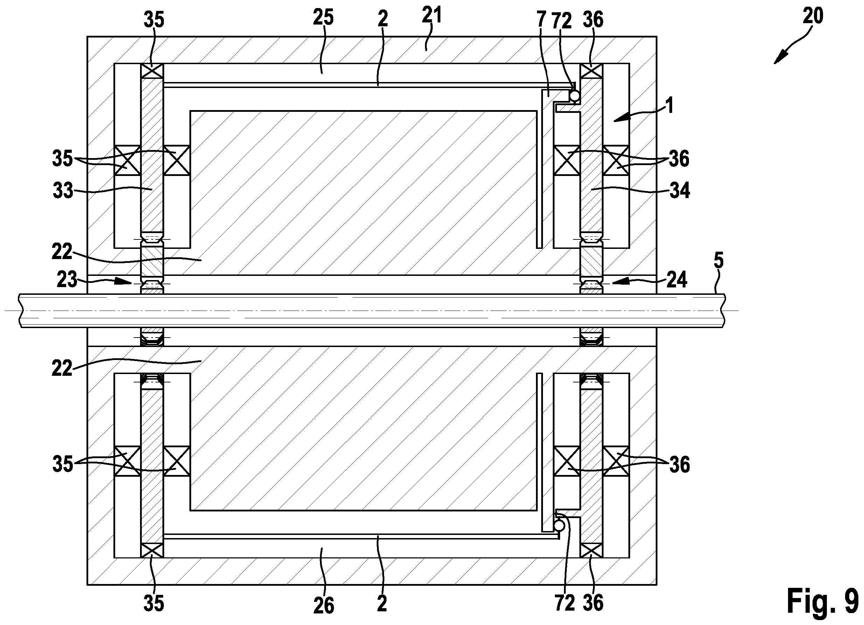

Figur 9 zeigt ein Energiewandlersystem 20, mit dem erwärmtes/gekühltes Fluid unter Verwendung einer der zuvor beschriebenen Energiewandler 1 erzeugt werden kann oder Bewegungsenergie aus Wärmeenergie zurückgewonnen werden kann. Die Querschnittsdarstellung der Figur 9 zeigt ein Gehäuse 21, aus dem die Antriebswelle 5 herausragt, die im Inneren mit dem Energiewandler 1 gekoppelt ist. Die Antriebswelle 5 ist in einer Wellenführung 22 gehalten, die fest mit dem Gehäuse 21 verbunden ist oder durch dieses ausgebildet ist.

Über jeweils ein Planetengetriebe 23, 24 kann die Antriebswelle 5 das erste und zweite Halteelement 3, 4 antreiben, die als Ringscheiben 33, 34 im Inneren des Gehäuses 21 drehbar gelagert sind. Eine jeweilige Lagerung 35, 36 der Ringscheiben 33, 34 ist zur Aufnahme axialer und radialer Kräfte ausgelegt und kann an beliebiger Stelle, wie z.B. am äußeren Umfangsrand oder auch axial versetzt zu den Planetengetrieben 23, 24 angeordnet sein.

Bezüglich des Querschnitts des Energiewandlersystems 20 sind mindestens zwei voneinander separierte Strömungskanäle 25, 26 jeweils entlang eines Teilsegments des Energiewandler 1 ausgebildet, durch die ein Fluid, wie z.B. Wasser oder Luft strömen kann. Die Strömungskanäle 25, 26 umfassen jeweils einen Strömungsabschnitt, der die thermoelastischen Elemente 2 in einem Abschnitt entlang der Umfangsrichtung um- bzw. überströmt, um so eine Wärmeübertragung zwischen den thermoelastischen Elementen 2 und dem Fluid zu gewährleisten. Die Strömungsabschnitte der Strömungskanäle 25, 26 können beispielsweise in Form von Zylindersegmenten innerhalb des Gehäuses 21 ausgebildet sein, um so eine möglichst enge Umströmung der thermoelastischen Elemente 2 zu erreichen.

Die Verwendung der Planetengetriebe 23, 24 ermöglicht es, innerhalb der sich drehenden Halteelemente 3, 4 und der thermoelastischen Elemente 2 feststehende Bauteile zu ermöglichen, so dass das jeweilige Profilelement 7, 7', 7", 7'" entsprechend ortsfest gehalten werden kann.

Gemäß einer weiteren nicht gezeigten Ausführungsform können auch mehrere konzentrisch zueinander angeordnete thermoelastische Anordnungen mit jeweils ringförmig, d.h. in einem Zylinder angeordnete thermoelastische Elementen vorgesehen sein. Die thermoelastischen Anordnungen können durch separate Führungseinrichtungen in synchroner Weise elastisch verformt bzw. entspannt werden. Es können auch bezüglich des Drehwinkels des Energiewandlers zueinander versetzte Phasen elastischer Verformung und Entspannung vorgesehen sein.

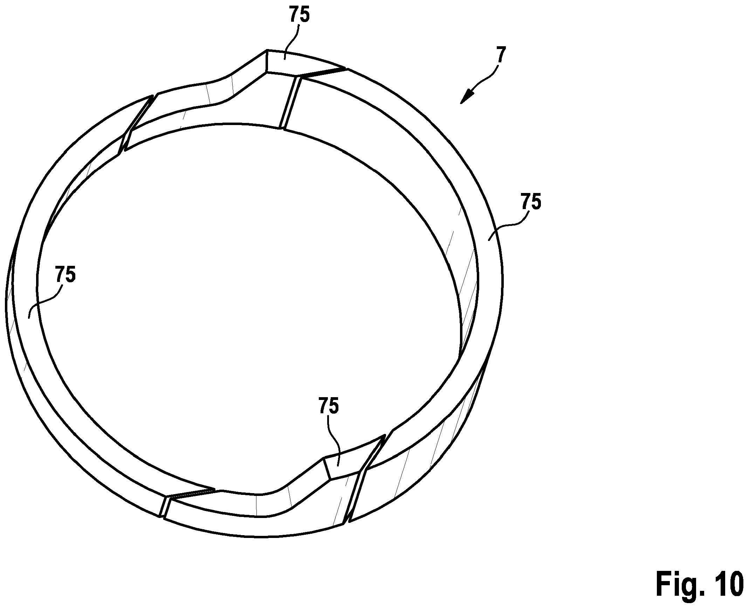

In Figur 10 ist schematisch beispielhaft dargestellt, das Profilelement 7 aus Einzelprofilsegmenten 75 zusammenzusetzen. Die Einzelprofilsegmente 75 weisen eine vordefinierte Kontur über einen bestimmten Winkelbereich auf. Die Eigenschaften des Energiewandlers 1 können durch Austausch eines oder mehrerer der Einzelprofilsegmente 75 mit unterschiedlichen Profilen bzw. Konturen an das gewünschte Systemverhalten angepasst werden. Weiterhin wird dadurch ein vereinfachter Einbau und Austausch des Profilelements 7 in dem Energiewandlersystem 20 unterstützt.

## Patentansprüche

1. Thermoelastischer Energiewandler (1), insbesondere eine thermoelastische Heiz/Kühlvorrichtung, zum Einsatz in einem Energiewandlersystem (20), umfassend:
- eine thermoelastische Anordnung mit mindestens einem thermoelastischen Element (2) aus einem thermoelastischen Material;
- zwei Halteelemente (3,4), zwischen denen das mindestens eine thermoelastische Element (2) in einer Längsrichtung angeordnet ist,
- ein Befestigungselement (6) zum Halten eines Endes des mindestens einen thermoelastischen Elements (2);
- eine Führungseinrichtung (7, 7"), die mit dem Befestigungselement (6) des mindestens einen thermoelastischen Elements (2) gekoppelt ist, um bei einer synchronen Rotation der Halteelemente (3,4) relativ zu der Führungseinrichtung (7) um die Längsrichtung eine Längenänderung des mindestens einen thermoelastischen Elements (2) in der Längsrichtung zu bewirken, so dass eine zyklische elastische Verformung und Entspannung des mindestens einen thermoelastischen Elements (2) erreicht wird,
**dadurch gekennzeichnet, dass** die Führungseinrichtung (7) mindestens ein Profilelement aufweist, das eine Führungsspur (72) zum Zusammenwirken mit dem Befestigungselement (6) des mindestens einen thermoelastischen Elements (2) aufweist, so dass bei Rotation der Halteelemente (3, 4) relativ zu der Führungseinrichtung (7) das Befestigungselement (6) entlang einer Kontur der Führungsspur (72) in einer Umfangsrichtung bewegt wird und gleichzeitig die Längenänderung in der Längsrichtung bewirkt.

2. Thermoelastischer Energiewandler (1) nach Anspruch 1,
wobei ein weiteres Ende des mindestens einen thermoelastischen Elements (2) fest an einem der Halteelemente (3,4) befestigt ist, oder
wobei ein weiteres Ende des mindestens einen thermoelastischen Elements (2) über ein weiteres Befestigungselement (6) mit einer zweiten Führungseinrichtung (7') gekoppelt ist, um bei einer Rotation der Halteelemente (3, 4) relativ zu der Führungseinrichtung und der zweiten Führungseinrichtung (7') eine Längenänderung des mindestens einen thermoelastischen Elements (2) in Längsrichtung zu bewirken, so dass eine zyklische elastische Verformung und Entspannung des mindestens einen thermoelastischen Elements (2) erreicht wird, wobei insbesondere die Führungseinrichtung (7) und die zweite Führungseinrichtung (7') das jeweilige Befestigungselement synchron, phasenverschoben oder asynchron bezüglich eines Drehwinkels der Halteelemente (3, 4) in der Längsrichtung auslenken.

3. Thermoelastischer Energiewandler (1) nach Anspruch 2, wenn das weitere Ende des mindestens einen thermoelastischen Elements (2) über ein weiteres Befestigungselement (6) mit einer zweiten Führungseinrichtung (7') gekoppelt ist, wobei die zweite Führungseinrichtung (7') mindestens ein Profilelement aufweist, das eine Führungsspur (72) zum Zusammenwirken mit dem Befestigungselement (6) des mindestens einen thermoelastischen Elements (2) aufweist, so dass bei Rotation der Halteelemente (3, 4) relativ zu der zweiten Führungseinrichtung (7') das Befestigungselement (6) entlang einer Kontur der Führungsspur (72) in einer Umfangsrichtung bewegt wird und gleichzeitig die Längenänderung in der Längsrichtung bewirkt.

4. Thermoelastischer Energiewandler (1) nach Anspruch 3, wobei das Profilelement (7) eine Profilscheibe aufweist, die eine sich in Längsrichtung erstreckende Kontur aufweist, entlang der das Befestigungselement (6) sich bewegt.

5. Thermoelastischer Energiewandler (1) nach Anspruch 3, wobei das Profilelement (7") einen Profilring aufweist, der eine nach innen oder außen gerichtete Führungsstruktur aufweist, um das Befestigungselement (6) des mindestens einen thermoelastischen Elements (2) in der Längsrichtung bei Rotation des Halteelements (3) relativ zu dem Profilelement (7") auszulenken.

6. Thermoelastischer Energiewandler (1) nach Anspruch 3 oder 4,
wobei das mindestens eine Befestigungselement (6) gegen ein Verkippen gehalten ist, oder
wobei das mindestens eine Profilelement (7, 7") mehrere konzentrische Führungspuren aufweist, um das mindestens eine Befestigungselement (6) gegen ein Verkippen zu halten.

7. Thermoelastischer Energiewandler (1) nach einem der Ansprüche 3 bis 6, wobei das mindestens eine Profilelement (7, 7") bei Rotation der Halteelemente (3, 4) relativ zu der Führungseinrichtung (7) eine Zug- oder eine Druckbelastung auf das mindestens eine thermoelastische Element (2) ausübt, oder wobei ein oder mehrere Profilelemente (7, 7', 7") vorgesehen sind, um bei Rotation der Halteelemente (3, 4) relativ zu der Führungseinrichtung (7, 7") sowohl eine Zug- als auch eine Druckbelastung auf das mindestens eine Befestigungselement (6) auszuüben.

8. Thermoelastischer Energiewandler (1) nach einem der Ansprüche 3 bis 6, wobei beide Haltelemente (3, 4) jeweils mit mindestens einem Profilelement (7, 7"') versehen sind, um die Längenänderung des mindestens einen thermoelastischen Elements (2) zu bewirken.

9. Thermoelastischer Energiewandle (1) nach Anspruch 8, wobei die jeweiligen mindestens einen Profilelemente (7, 7"') an beiden Halteelementen (3, 4) gegeneinander verdrehbar sind, so dass die Bewegungen der Befestigungselemente (6) beidseitig synchron, phasenverschoben oder asynchron bezüglich der Rotation der Halteelemente (3, 4) relativ zu der Führungseinrichtung (7) erfolgen.

10. Thermoelastischer Energiewandler (1) nach einem der Ansprüche 3 bis 9, wobei das mindestens eine Profilelement (7, 7") eine Führungsspur (72) aufweist, dessen Kontur Abschnitte aufweist:
- um bei Rotation der Halteelemente (3, 4) relativ zu der Führungseinrichtung (7) unterschiedliche Gradienten der Längenänderung des mindestens einen thermoelastischen Elements (2) bezüglich des Drehwinkels der Halteelemente (3, 4), insbesondere abweichend zu einer sinusförmigen Verformung, zu bewirken; und/oder
- um bei Rotation der Halteelemente (3, 4) relativ zu der Führungseinrichtung (7) zwei oder mehrere Längenänderungen des mindestens einen thermoelastischen Elements (2) in eine Richtung pro Umdrehung der Halteelemente (3, 4) zu bewirken.

11. Thermoelastischer Energiewandler (1) nach Anspruch 10,
wobei die Führungsspur zwischen Bereichen mit hohem Gradienten im Wesentlichen flach ausgebildet ist, so dass bei einer Rotation keine Längenänderung des mindestens einen thermoelastischen Elements (2) bewirkt wird.

12. Thermoelastischer Energiewandler (1) nach einem der Ansprüche 1 bis 11,
wobei mehrere thermoelastischen Elemente (2) in einer oder mehreren konzentrischen Kreisanordnungen zwischen den Halteelementen (3, 4) angeordnet sind, wobei jedem der Kreisanordnungen eine separate Führungseinrichtung zugeordnet ist.

13. Thermoelastischer Energiewandler (1) nach einem der Ansprüche 1 bis 12,
wobei das Profilelement (7) aus Einzelprofilsegmenten (75) zusammengesetzt ist.

14. Energiewandlersystem (20), insbesondere ein Heiz/Kühlsystem, umfassend:
- ein Gehäuse (21);
- ein thermoelastischer Energiewandler (1) nach einem der Ansprüche 1 bis 13, der in dem Gehäuse (21) aufgenommen ist;
- eine Antriebswelle (5) zum Rotieren der Halteelemente (3) relativ zu der Führungseinrichtung (7), wobei insbesondere die Antriebswelle mit den Halteelementen (3, 4) oder mit der Führungseinrichtung (7) über mindestens ein Planetengetriebe (23, 24) gekoppelt ist;
- mindestens zwei separate Strömungskanäle (25, 26) zum Leiten eines Fluids jeweils durch einen Abschnitt, der ein Segment einer durch die Bewegung des mindestens einen thermoelastischen Elements (2) definierten zylindrischen Mantelfläche umfasst oder durch dieses begrenzt wird.

## Claims

1. A thermoelastic energy converter (1), in particular a thermoelastic heating/cooling device, for use in an energy conversion system (20), comprising:
- a thermoelastic arrangement having at least one thermoelastic element (2) made of a thermoelastic material;
- two holding elements (3,4) between which the at least one thermoelastic element (2) is arranged in a longitudinal direction,
- a fastening element (6) for holding one end of the at least one thermoelastic element (2);
- a guide means (7, 7") coupled with the fastening element (6) of the at least one thermoelastic element (2) for causing a change in length of the at least one thermoelastic element (2) in the longitudinal direction upon synchronous rotation of the holding elements (3, 4) relative to the guide means (7) about the longitudinal direction, so that a cyclic elastic deformation and relaxation of the at least one thermoelastic element (2) is achieved, **characterized in that** the guide means (7) comprises at least one profile element having a guide track (72) for engagement with the fastening element (6) of the at least one thermoelastic element (2), so that upon rotation of the holding elements (3, 4) relative to the guide means (7) the holding element (6) is moved along a contour of the guide track (72) in a circumferential direction and causes the length change in the longitudinal direction at the same time.

2. A thermoelastic energy converter (1) according to claim 1,
wherein a further end of the at least one thermoelastic element (2) is fixedly attached to one of the holding elements (3,4), or
wherein a further end of the at least one thermoelastic element (2) is coupled via a further holding element (6) to a second guide means (7') in order to guide the at least one thermoelastic element (2) during a rotation of the holding element (3, 4) relative to the guide means and the second guiding means (7") to cause a change in length of the at least one thermoelastic element (2) in the longitudinal direction, so that a cyclic elastic deformation and relaxation of the at least one thermoelastic element (2) is achieved, wherein in particular the guide means (7) and the second guide means (7') synchronously, in a phase-shifted manner, or asynchronously move the respective holding element with respect to a rotational angle of the holding elements (3, 4).

3. The thermoelastic energy converter (1) according to claim 2, wherein, if the further end of the at least one thermoelastic element (2) is coupled with a second guide means (7") by means of a further fastening element (6), the second guide means (7') has at least one profile element which has a guide track (72) for engagement with the holding element (6) of the at least one thermoelastic element (2), so that upon rotation of the holding elements (3, 4) relative to the second guide means (7'), the fastening element (6) is moved along a contour of the guide track (72) in a tangential direction and causes the change in length in the longitudinal direction at the same time.

4. The thermoelastic energy converter (1) according to claim 3, wherein the profile element (7) has a profile disc which has a contour extending in the longitudinal direction, along which the fastening element (6) moves.

5. The thermoelastic energy converter (1) according to claim 3, wherein the profile element (7") comprises a profile ring which has an inwardly or outwardly directed guide structure to move the fastening element (6) of the at least one thermoelastic element (2) in the longitudinal direction upon rotation of the holding element (3) relative to the profile element (7").

6. The thermoelastic energy converter (1) according to claim 3 or 4, wherein the at least one fastening element (6) is held against tilting, or wherein the at least one profile element (7, 7") has a plurality of concentric guiding tracks to hold the at least one fastening element (6) against tilting.

7. The thermoelastic energy converter (1) according to any one of claims 3 to 6,
wherein the at least one profile element (7, 7") exerts a tensile or compressive load on the at least one thermoelastic element (2) upon rotation of the retaining elements (3, 4) relative to the guide means (7), or
wherein one or more profile elements (7, 7', 7") are provided in order to exert a tensile or compressive load on the at least one thermoelastic element (2) upon rotating of the holding elements (3, 4) relative to the guide means (7, 7").

8. The thermoelastic energy converter (1) according to one of the claims 3 to 6, wherein both holding elements (3, 4) are each provided with at least one profile element (7, 7"') in order to cause the change in length of the at least one thermoelastic element (2).

9. The thermoelastic energy converter (1) according to claim 8, wherein the respective at least one profile element (7, 7"') on the two holding elements (3, 4) are rotatable relative to one another, so that the movements of the fastening elements (6) are synchronous, phase-shifted, or asynchronous on both sides with respect to the rotation of the holding elements (3, 4) relative to the guide means (7).

10. The thermoelastic energy converter (1) according to one of the claims 3 to 9, wherein the at least one profile element (7, 7") has a guide track (72), the contour of which has sections:
- in order to cause different gradients of the change in length of the at least one thermoelastic element (2) with respect to the angle of rotation of the holding elements (3, 4), in particular deviating from a sinusoidal deformation, upon rotation of the holding elements (3, 4) relative to the guide means (7); and/or
- in order to cause two or more changes in length of the at least one thermoelastic element (2) in one direction per rotation of the holding elements (3, 4), upon rotation of the holding elements (3, 4) relative to the guide means (7).

11. The thermoelastic energy converter (1) according to claim 10,
wherein the guide track between regions of high gradient is substantially flat, so that no change in the length of the at least one thermoelastic element (2) is caused during rotation.

12. The thermoelastic energy converter (1) according to any one of claims 1 to 11,
wherein a plurality of thermoelastic elements (2) are arranged in one or more concentric circular arrangements between the holding elements (3, 4), wherein each of the circular arrangements is associated with a separate guiding means.

13. The thermoelastic energy converter (1) according to one of the claims 1 to 12, wherein the profile element (7) is composed of individual profile segments (75).
segments (75).

14. An energy converter system (20), in particular a heating/cooling system, comprising:
- a housing (21);
- a thermoelastic energy converter (1) according to any one of claims 1 to 13, which is accommodated in the housing (21);
- a drive shaft (5) for rotating the holding elements (3) relative to the guide means (7), wherein in particular the drive shaft is connected with the holding elements (3, 4) or with the guide means (7) via at least one planetary gear (23, 24);
- at least two separate flow channels (25, 26) for guiding a fluid through a respective section wherein the section comprises or is limited by a segment of a cylindrical surface defined by the movement of the at least one thermoelastic element (2).

## Revendications

1. Convertisseur d'énergie thermoélastique (1), en particulier dispositif de chauffage/refroidissement thermoélastique, destiné à être utilisé dans un système de convertisseur d'énergie (20), comprenant :
- un agencement thermoélastique comportant au moins un élément thermoélastique (2) constitué d'un matériau thermoélastique ;
- deux éléments de maintien (3, 4), entre lesquels l'au moins un élément thermoélastique (2) est disposé dans une direction longitudinale,
- un élément de fixation (6) destiné à maintenir une extrémité de l'au moins un élément thermoélastique (2) ;
- un appareil de guidage (7, 7") qui est accouplé à l'élément de fixation (6) de l'au moins un élément thermoélastique (2) afin de provoquer, lors d'une rotation synchrone des éléments de maintien (3, 4) par rapport à l'appareil de guidage (7) autour de la direction longitudinale, un changement de longueur de l'au moins un élément thermoélastique (2) dans la direction longitudinale, de sorte qu'une déformation et un relâchement élastiques cycliques de l'au moins un élément thermoélastique (2) sont obtenus,
**caractérisé en ce que** l'appareil de guidage (7) présente au moins un élément profilé qui présente une piste de guidage (72) destinée à coopérer avec l'élément de fixation (6) de l'au moins un élément thermoélastique (2), de sorte que, lors de la rotation des éléments de maintien (3, 4) par rapport à l'appareil de guidage (7), l'élément de fixation (6) est déplacé le long d'un contour de la piste de guidage (72) dans une direction circonférentielle et provoque en même temps le changement de longueur dans la direction longitudinale.

2. Convertisseur d'énergie thermoélastique (1) selon la revendication 1,
dans lequel une autre extrémité de l'au moins un élément thermoélastique (2) est solidement fixée à l'un des éléments de maintien (3, 4), ou
dans lequel une autre extrémité de l'au moins un élément thermoélastique (2) est accouplée à un second appareil de guidage (7') par l'intermédiaire d'un autre élément de fixation (6) afin de provoquer, lors d'une rotation des éléments de maintien (3, 4) par rapport à l'appareil de guidage et au second appareil de guidage (7'), un changement de longueur de l'au moins un élément thermoélastique (2) dans la direction longitudinale, de sorte qu'une déformation et un relâchement élastiques cycliques de l'au moins un élément thermoélastique (2) sont obtenus, en particulier l'appareil de guidage (7) et le second appareil de guidage (7') déviant l'élément de fixation respectif de manière synchrone, déphasée ou asynchrone par rapport à un angle de rotation des éléments de maintien (3, 4) dans la direction longitudinale.

3. Convertisseur d'énergie thermoélastique (1) selon la revendication 2, si l'autre extrémité de l'au moins un élément thermoélastique (2) est accouplée à un second appareil de guidage (7') par l'intermédiaire d'un autre élément de fixation (6),
dans lequel le second appareil de guidage (7') présente au moins un élément profilé qui présente une piste de guidage (72) destinée à coopérer avec l'élément de fixation (6) de l'au moins un élément thermoélastique (2), de sorte que lors de la rotation des éléments de maintien (3, 4) par rapport au second appareil de guidage (7'), l'élément de fixation (6) est déplacé le long d'un contour de la piste de guidage (72) dans une direction circonférentielle et provoque en même temps le changement de longueur dans la direction longitudinale.

4. Convertisseur d'énergie thermoélastique (1) selon la revendication 3, dans lequel l'élément profilé (7) présente un disque profilé qui présente un contour s'étendant dans la direction longitudinale et le long duquel se déplace l'élément de fixation (6).

5. Convertisseur d'énergie thermoélastique (1) selon la revendication 3, dans lequel l'élément profilé (7") présente un anneau profilé qui présente une structure de guidage dirigée vers l'intérieur ou vers l'extérieur afin de dévier l'élément de fixation (6) de l'au moins un élément thermoélastique (2) dans la direction longitudinale lors de la rotation de l'élément de maintien (3) par rapport à l'élément profilé (7").

6. Convertisseur d'énergie thermoélastique (1) selon la revendication 3 ou 4,
dans lequel l'au moins un élément de fixation (6) est maintenu contre un basculement, ou
dans lequel l'au moins un élément profilé (7, 7") présente plusieurs pistes de guidage concentriques afin de maintenir l'au moins un élément de fixation (6) contre un basculement.

7. Convertisseur d'énergie thermoélastique (1) selon l'une des revendications 3 à 6, dans lequel l'au moins un élément profilé (7, 7") exerce une contrainte de traction ou de compression sur l'au moins un élément thermoélastique (2) lors de la rotation des éléments de maintien (3, 4) par rapport à l'appareil de guidage (7), ou dans lequel un ou plusieurs éléments profilés (7, 7', 7") sont prévus afin d'exercer une contrainte de traction ainsi qu'une contrainte de compression sur l'au moins un élément de fixation (6) lors de la rotation des éléments de maintien (3, 4) par rapport à l'appareil de guidage (7, 7").

8. Convertisseur d'énergie thermoélastique (1) selon l'une des revendications 3 à 6, dans lequel les deux éléments de maintien (3, 4) sont respectivement pourvus d'au moins un élément profilé (7, 7"') afin de provoquer le changement de longueur de l'au moins un élément thermoélastique (2).

9. Convertisseur d'énergie thermoélastique (1) selon la revendication 8, dans lequel les au moins un élément profilé (7, 7"') respectifs sur les deux éléments de maintien (3, 4) peuvent être tournés l'un contre l'autre, de sorte que les mouvements des éléments de fixation (6) ont lieu de manière synchrone, déphasée ou asynchrone des deux côtés, par rapport à la rotation des éléments de maintien (3, 4) par rapport à l'appareil de guidage (7).

10. Convertisseur d'énergie thermoélastique (1) selon l'une des revendications 3 à 9, dans lequel l'au moins un élément profilé (7, 7") présente une piste de guidage (72), dont le contour présente des sections :
- pour provoquer des gradients différents du changement de longueur de l'au moins un élément thermoélastique (2) par rapport à l'angle de rotation des éléments de maintien (3, 4), en particulier différant d'une déformation sinusoïdale, lors de la rotation des éléments de maintien (3, 4) par rapport à l'appareil de guidage (7) ; et/ou
- pour provoquer au moins deux changements de longueur de l'au moins un élément thermoélastique (2) dans une direction par tour des éléments de maintien (3, 4) lors de la rotation des éléments de maintien (3, 4) par rapport à l'appareil de guidage (7).

11. Convertisseur d'énergie thermoélastique (1) selon la revendication 10,
dans lequel la piste de guidage est conçue pour être essentiellement plate entre des régions comportant un gradient élevé, de sorte qu'aucun changement de longueur de l'au moins un élément thermoélastique (2) n'est provoqué lors d'une rotation.

12. Convertisseur d'énergie thermoélastique (1) selon l'une des revendications 1 à 11, dans lequel plusieurs éléments thermoélastiques (2) sont disposés dans un ou plusieurs agencements circulaires concentriques entre les éléments de maintien (3, 4), un appareil de guidage séparé étant attribué à chacun des agencements circulaires.

13. Convertisseur d'énergie thermoélastique (1) selon l'une des revendications 1 à 12, dans lequel l'élément profilé (7) est constitué de segments profilés individuels (75).

14. Système de convertisseur d'énergie (20), en particulier système de chauffage/refroidissement, comprenant :
- un boîtier (21) ;
- un convertisseur d'énergie thermoélastique (1) selon l'une des revendications 1 à 13, lequel est reçu dans le boîtier (21) ;
- un arbre d'entraînement (5) permettant de faire tourner les éléments de maintien (3) par rapport à l'appareil de guidage (7), en particulier l'arbre d'entraînement étant accouplé aux éléments de maintien (3, 4) ou à l'appareil de guidage (7) par l'intermédiaire d'au moins un engrenage planétaire (23, 24) ;
- au moins deux canaux d'écoulement séparés (25, 26) permettant respectivement de conduire un fluide à travers une section qui comprend ou est limitée par un segment d'une surface d'enveloppe cylindrique définie par le mouvement de l'au moins un élément thermoélastique (2).
